# EUROPEAN PATENT APPLICATION

(11) **EP 1 470 956 A1**
(43) Date of publication of application: **27.10.2004**
(21) Application number: 04252321.7
(22) Date of filing: 20.04.2004
(51) Int. Cl.: B60P 3/32, B62D 23/00

(54) **Caravan**

(30) Priority: 26.04.2003 GB 0309583
(71) Applicant: Hobbs, Clifford Jack, Whitewood, Castleford WF10 5PJ (GB)
(72) Inventor: Hobbs, Clifford Jack, Whitewood, Castleford WF10 5PJ (GB)
(74) Representative: Walsh, David Patrick

(57) **Abstract**

A caravan (50) comprising a body section (54) and hitching means (52) which are adapted to be attached to a drive vehicle. The hitching means (52) and the body section (54) have a unitary structure.

## Description

This invention relates to caravans.

Touring caravans are commonly used vehicles which generally consist of a body which is mounted on to two or more wheels, and which is attached to a drive vehicle by a coupling. A known type of caravan has its body mounted on to a separate chassis with the vehicle coupling mounted at the front thereof. The chassis typically extends from the coupling to a point behind the axis of the wheels of the caravan.

Such a caravan design, although prevalent in the art, suffers many problems. One problem concerns the overall weight of caravan being very large compared to the drive vehicle because of the body and the chassis. This results in more power and therefore more fuel being required to pull the caravan. Furthermore, the drive vehicle needs to have sufficient power to pull the caravan without incurring damage for safety reasons.

A further problem of such a caravan arrangement is that the caravan stands tall, i.e. it stands relatively high off the ground. This is a result of the interior floor of the caravan body being built on top of the chassis. Standing tall causes problems when towing the caravan because its centre of gravity is high, making it unstable at higher speeds thereby having a tendency to 'snake' . In addition, the caravan is unstable when cornering, and has a high load transfer under acceleration and braking. Furthermore, a tall caravan will have high wind resistance to the front when being pulled, effectively making the caravan even heavier to tow, which can be detrimental to the towing vehicle, and requiring even more fuel. In addition, a tall caravan will have a high wind resistance to side winds, resulting in an increased risk of the caravan overturning in strong winds.

It is one aim of embodiments of the present invention to address the above problems and to provide a caravan having a construction which does not suffer from the above mentioned problems of traditional caravan designs.

According to a first aspect of the present invention there is provided a caravan comprising a body section and hitching means adapted to be attached to a drive vehicle, the hitching means and the body section having a unitary structure.

Advantageously, unlike prior art caravans, the caravan of the present invention does not comprise a separate chassis, for supporting the body section and which chassis has a hitch for connection to a drive vehicle. Hence, advantageously, the overall weight of the caravan of the present invention is much lower than traditional caravans, which comprise a chassis. In addition, the unitary structure provides strength and rigidity throughout the caravan.

Preferably, the hitching means comprises a box section, which is preferably substantially hollow, and which may extend outwardly from the body section. Preferably, the hitching means comprises a lower panel, an upper panel and preferably two side panels, which are joined together to form the box section.

The hitching means may comprise an extension of the body section, preferably an extension of the internal structure of the body section of the caravan. Preferably, the hitching means is integrated into the body section. Preferably, the hitching means comprises an extension of at least one internal support member, which extends through the internal structure of the body section. Preferably, the body section comprises at least two internal support members, which extend at least partially along a longitudinal axis of the body section. Preferably, the at least two internal support members extend substantially parallel with each other.

Preferably, and advantageously, the internal structure of the body section and, preferably the at least one internal support member, forms furniture inside the caravan, for example, a bed box, and storage spaces etc.

Preferably, the hitching means tapers inwardly in a direction extending away from the body section of the caravan. Preferably, the hitching means comprises a towing hitch at one end thereof, preferably distal to the body section. A drive vehicle may be attached to the caravan by the towing hitch.

Preferably, the towing hitch is attached to an elongate shaft, which preferably extends through the hitching means, preferably substantially through the centre thereof. Preferably, the shaft is supported by a first mounting and/or bearing, which is located outside the hitching means. Preferably, the shaft is supported by a second mounting and/or bearing, which is located inside the hitching means substantially towards the end of the shaft opposite to that of the first mounting/bearing.

Preferably, the shaft is adapted to rotate about the first and, preferably the second mounting/bearing. Preferably, the shaft is adapted to slide along a longitudinal axis thereof. Advantageously, this ability to slide and rotate improves the manoeuvrability of the caravan as it is being towed. In addition, an advantage of the slidability of the shaft along the longitudinal axis is that this motion, relative to the caravan, provides for the operation of the overrun braking system normally fitted to caravans.

Preferably, the body comprises at least one wheel attached thereto, more preferably at least two wheels which are attached to either side of the body. Preferably, the at least one wheel is rotatably attached to suspension means, which suspension means is preferably secured to the caravan. Preferably, the suspension means is pivotally attached to a side wall of the body section, and preferably pivotally attached to an anchor point which is disposed internally of the caravan.

Preferably, the suspension means comprises a suspension arm. Preferably, the suspension means comprises a first member which extends substantially parallel with the longitudinal axis of the body section, and a second member attached thereto, which second member, preferably extends substantially transverse to the longitudinal axis of the body section.

Preferably, the suspension means is substantially surrounded by a support section, which is attached to a floor of the caravan, preferably extending between both side walls of the caravan. Advantageously, the support section provides strength, which resists loads imparted thereon by the pivotable suspension means. Preferably, springs and/or dampers are attached to the suspension means to support the weight of the caravan.

Preferably, the caravan comprises at least one corner-steadying member, which is preferably mounted on a shaft which is substantially vertically arranged at a corner of the caravan. When the caravan is stationary, the corner steadying member may be lowered down its shaft such that, upon contacting the ground, it serves to stabilize the caravan.

In addition, the caravan may comprise a jockey wheel, which may be adapted to provide further stability when the caravan is stationary. The jockey wheel may be attached to a substantially vertical shaft located at a forward end of the body section, and which may be slid up and down a substantially vertically arranged tubular sleeve.

For a better understanding of the invention, and to show how embodiments of the same may be carried into effect, reference will be made, by way of example, to the accompanying diagrammatic drawings, in which:-
Figure 1 shows a perspective view of a caravan;
Figure 2 shows a partly sectional side view of the caravan;
Figure 3 shows a front view of the caravan; and
Figure 4 shows a cross-sectional plan view of the caravan.

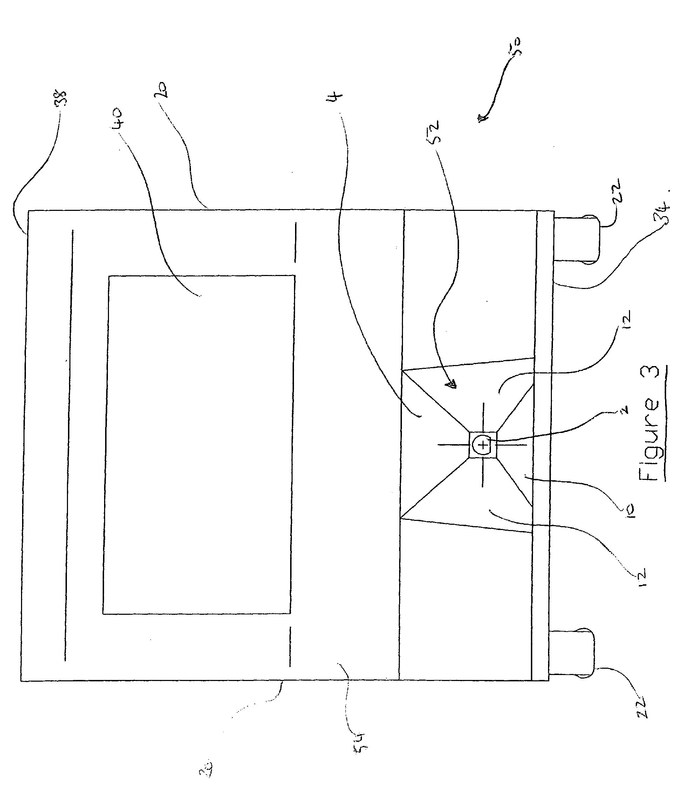

Referring to the Figures, there is shown a caravan 50 having a main body section 54 and a nose section 52 at the front end thereof. The nose section 52 is made from a lower panel 10, an upper panel 4 and two side panels 12, which are joined together to form the nose section 52 as illustrated in Figure 3. The nose section 52 is a substantially hollow box.

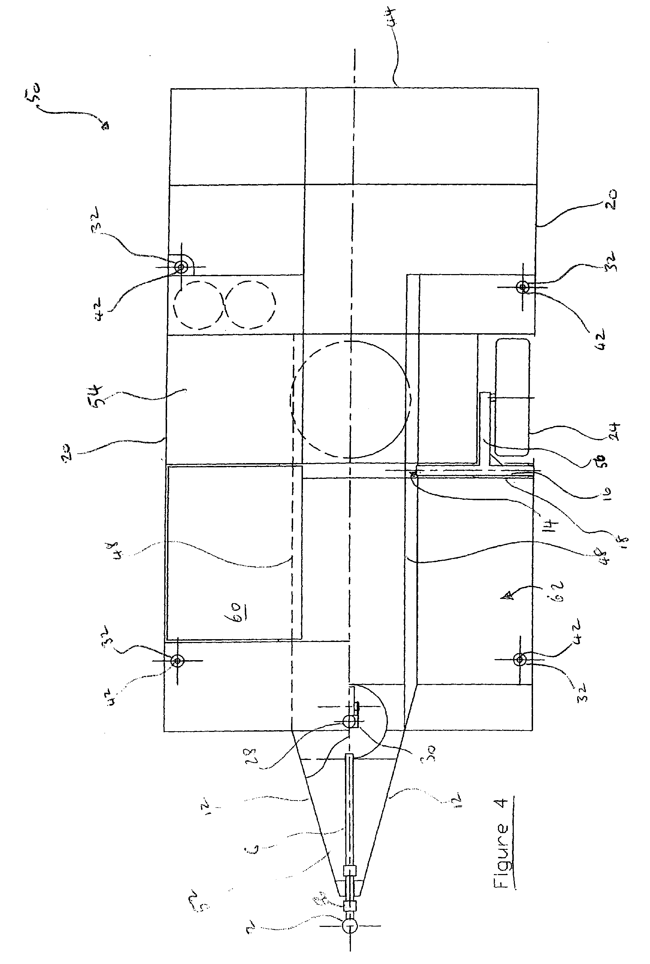

Referring to Figure 4, the nose section 52 can be seen to be formed as an extension of an internal support member 48 which itself extends inside and through the body section 54 of the caravan 50. The internal support member 48 forms fixed parts of the internal structure of the caravan 50, i.e. internal furniture of the caravan 50, for example, bed box 62, and storage spaces 60.

The nose section 52 tapers inwardly in a direction extending away from the body section 54 of the caravan 50. At the front of the nose section 52, distal to the body section 54, there is a towing hitch 2 by which a drive vehicle (not shown) may be attached to the caravan 50. The hitch 2 is attached to an elongate shaft 6, which extends rearwardly through the centre of the hollow nose section 52. The towing hitch shaft 6 is supported on a shoulder 56. A first mounting and bearing (not shown) is located behind the shoulder 56 inside the nose section 52, and a second mounting and bearing 8, is located inside the nose section 52 at the opposite end of the shaft 6. The shaft 6 is able to rotate about the first and second bearings 8, and is also able to slide along a longitudinal axis thereof. This ability to slide and rotate improves the manoeuvrability of the caravan 50 as it is being towed. Additionally, this ability to slide, relative to the caravan 50, provides for the operation of the overrun braking system (not shown) which is normally fitted to the caravan 50.

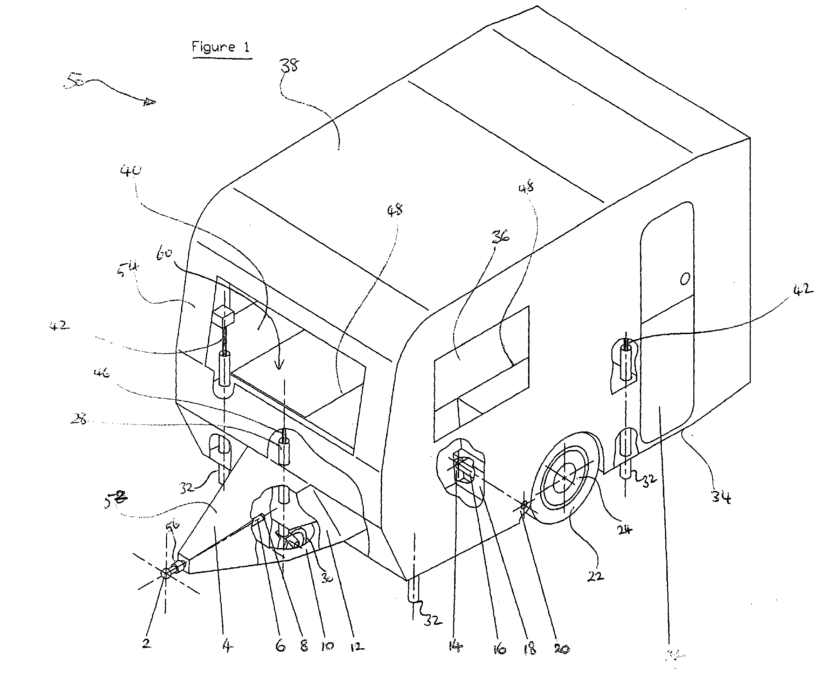

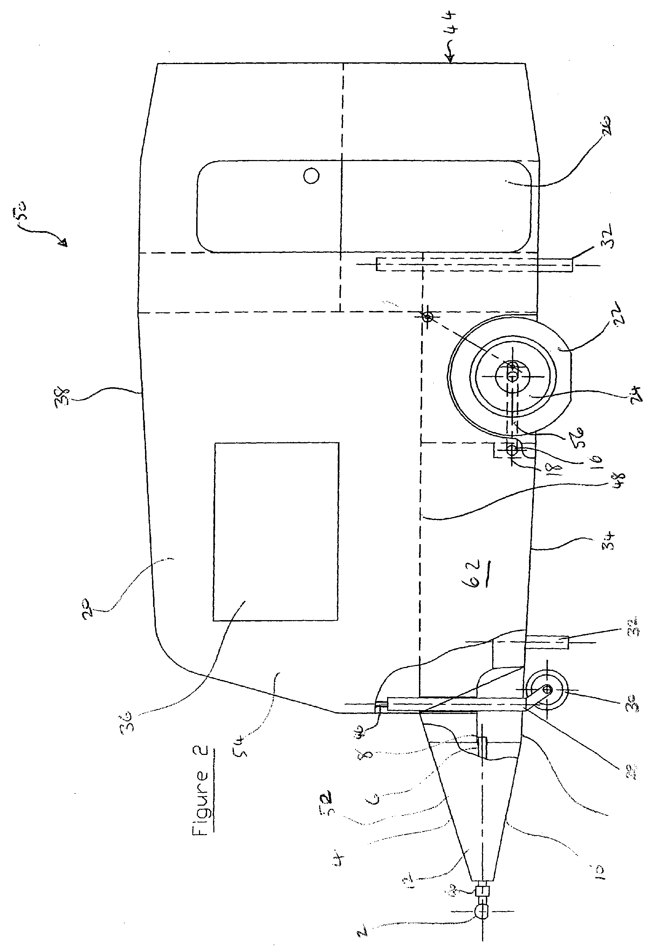

The body section 54 of the caravan 50 has an upper roof 38, a lower floor 34, a rear wall 44 and two side walls 20. The caravan 50 has windows 36,40, and an access door 26 by which a person may get in to and out of the caravan 50. The caravan 50 also has corner-steadying members 32 which are mounted about screw threaded shafts 42 which are vertically arranged at each corner of the caravan 50 as shown in Figure 4. When the caravan 50 is stationary, the corner steadying members 32 may be lowered down their respective shaft 42 such that, upon contacting the ground, they stabilize the caravan 50. In addition, as shown in Figures 1 and 2, the caravan 50 is fitted with a jockey wheel assembly 28,30, which provides further stability when the caravan 50 is stationary. The jockey wheel assembly 28,30 includes a vertical screw-threaded shaft 46 located at the forward end of the body section 54. The assembly 28,30 may be moved up and down the vertically arranged shaft 46.

Referring to Figure 4, the caravan 50 is shown being supported by two wheels 24, one located on either side of the caravan 50, and each wheel 24 having a tyre 22. Each wheel 24 is rotatably attached to a suspension arm 76,16 which is secured to each side of the caravan 50. Each suspension arm 76,16 is pivotally attached to the side wall 20, and pivotally attached to an anchor point 14 which is inside the caravan 50 just above the floor 34. A suspension support section 18 surrounds each suspension arm 76,16, and is attached to the floor 34, extending between both side walls 20 of the caravan 50. The support section 18 provides strength, which resists loads imparted thereon by the pivotable suspension arms 76,16.

The weight of the caravan 50 is supported by springs and dampers (not shown), which are attached as necessary at the lower ends thereof to the suspensions arms 76,16. The upper ends of the springs and dampers transmit the loads into the internal structure of the caravan 50.

As shown in Figure 1, the floor 34 in the rear part of the caravan 50 is supported by the underside of the body 54. The floor 74 in the forward part of the caravan 50 is at a higher level than in the rear, and serves as moveable lids 60 of storage spaces. The side wall 20 of the caravan 50 in the area above the access door 26 is sufficiently strong to withstand all vertical loads in this area so that the floor 34 and side wall 20 in the area below the door 26 are not required to withstand these loads.

Advantages of the caravan 50 reside in the fact that the body section 54 is not mounted onto a separate heavy chassis as in prior art caravans. Therefore, the overall weight of the caravan 50 is much less and it is therefore easier and safer to tow the caravan 50 by the drive vehicle. Furthermore, because there is no chassis, the caravan does not stand so tall above the ground level and hence, no step is required down to the ground level. Therefore, there is a reduced chance that someone could fall and injure themselves when alighting the caravan. There is also a reduced isolation from people outside.

The reduced front and side areas means reduced drag. In addition, there is reduced chance of the caravan 50 overturning in a side wind. In addition, less headroom is required for storage, and there is a reduced visual impact when storing the caravan 50 at home. The caravan 50 has a lower centre of gravity and is more stable when cornering and is less likely to 'snake'. Further, there is a reduced load transfer under acceleration and braking.

The design of the caravan 50 allows the integration of various fittings and services into the structure itself, greater bed box storage, and underfloor storage for heavy items. The unitary construction allows the caravan 50 to have smooth contours which results in reduced drag. In addition, there are fewer joints used and hence a lower likelihood that leaks will occur. Finally, the caravan 50 is more robust in case of an accident.

The reader's attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings), may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

1. A caravan comprising a body section and hitching means adapted to be attached to a drive vehicle, **characterised in that** the hitching means and the body section have a unitary structure.

2. A caravan as claimed in claim 1, wherein the hitching means comprises an extension of the internal structure of the body section of the caravan.

3. A caravan as claimed in claim 2, wherein the hitching means comprises an extension of at least one internal support member which extends through the internal structure of the body section.

4. A caravan as claimed in claim 3, wherein two internal support members are provided which extend at least partially along a longitudinal axis of the body section.

5. A caravan as claimed in any one of the preceding claims, wherein the internal structure of the body section forms furniture inside the caravan, for example, a bed box, and storage spaces etc.

6. A caravan as claimed in any one of the preceding claims, wherein the hitching means comprises a towing hitch at one end thereof.

7. A caravan as claimed in claim 6, wherein the towing hitch is attached to an elongate shaft which extends through the hitching means.

8. A caravan as claimed in claim 7, wherein the shaft is adapted to rotate about at least one mounting or bearing.

9. A caravan as claimed in claims 7 or 8, wherein the shaft is adapted to slide along a longitudinal axis thereof.

10. A caravan as claimed in any one of the preceding claims, wherein the body section comprises at least one wheel attached thereto, the at least one wheel is rotatably attached to suspension means, the suspension means being pivotally attached to a side wall of the body section, and pivotally attached to an anchor point which is disposed internally of the caravan.
